# EUROPÄISCHE PATENTSCHRIFT

(11) **EP 2 181 945 B1**
(45) Veröffentlichungstag und Bekanntmachung des Hinweises auf die Patenterteilung: **28.09.2011**
(21) Anmeldenummer: 08019209.9
(22) Anmeldetag: 03.11.2008
(51) Int. Cl.: B65G 13/11

(54) **Rollenbahnsystem für Regale und Rutschregale**
Rollerway for shelves and for gravity feed shelves
Couloir à rouleaux pour étagères et étagères alimentées par gravité

(43) Veröffentlichungstag der Anmeldung: 05.05.2010
(73) Patentinhaber: Nilsson, Rickard, 65558 Balduinstein (DE)
(72) Erfinder: Nilsson, Rickard, 65558 Balduinstein (DE)
(74) Vertreter: Preis, Tobias

(56) Entgegenhaltungen:
- EP-A1- 2 159 169
- GB-A- 2 023 084
- JP-U- 3 097 414

## Beschreibung

Regale und Rutschregale nach der First in First out - Methode weisen verschiedene System auf, um das Herabrutschen der Waren in den jeweiligen Warenschienen bzw. Warenbahnen zu gewährleisten. Neben Rutschbahnen für kleinere Produkte gibt es Rollenbahnen für größere und schwere Produkte, da diese auf den Rutschbahnen aufgrund des Eigengewichtes, der Beschaffenheit und ihres Materials nicht herab gleiten oder nur schwer herab gleiten. Rollenbahnen üblicher Bauweise bestehen oftmals aus schmalen Rollen, auf denen nur große und plan aufliegende Kartons herab gleiten können. Außerdem sind Rollenbahnen nach der bisher bekannten Bauart nicht in der Lage, z.B. Getränkekartons, die auf der Standfläche nach innen bäuchige Auswölbungen aufweisen, herab gleiten zu lassen. Wegen ihrer Form sind Getränkekartons grundsätzlich nur bedingt geeignet, auf Rollenbahnen herkömmlicher Bauart präsentiert zu werden, da diese entweder mit der konkaven Innenwölbung auf den Rollen aufsitzen oder mit den bäuchigen Auswölbungen an den Rollen hängen bleiben. Weiterhin sind übliche Rollenbahnen kompliziert im Aufbau und nicht kostengünstig herzustellen Rollenbahnen komplett aus Kunststoff bieten nicht ausreichend Stabilität, bzw. müssten zu groß dimensioniert werden um eine ausreichende Tragkraft entwickeln zu können. Komplette Rollenbahnen aus Stahl sind kostenintensiv und die Verwendung von Kunststoff und Stahl im Rollenbereich verursacht hohe Reibungswerte und beeinträchtigt die Gravitationsfunktion. Die Arretierung bzw. das Fixieren von Rollen in solchen Rollenbahnen wird bisher mit technisch und finanziell aufwändigen Systemen gelöst.

JP 3 097 414 U beschreibt ein Rollenbahnsystem, wobei Rollenhalter auf dem Rahmen der Rollenbahn aufgesetzt werden.

Der mit dem Patentanspruch angegebenen Erfindung liegt das Problem zugrunde, eine für sämtliche Waren funktionierende Rollenbahn zu schaffen, insbesondere für den Einsatz in Rutschregalen nach dem First in First out - System. Die Rollenbahnen sollen für sämtliche erdenklichen Stückwaren unter permanenter Gewährleistung des Herabrutschens in den Rutschregalen einsetzbar sein. Die Rollenbahnen sollen einfach und kostengünstig, aus so wenig wie möglichen Einzelteilen bestehen und aus hygienischen Gesichtspunkten einfach zu reinigen sein. Die Konstruktion muss hohe Stabilität bei geringem Gewicht und kleinen Ausmaßen gewährleisten. Die Materialien müssen so eingesetzt werden, dass möglichst geringe Reibwerte bei Rollendrehung entstehen.

Diese Probleme werden mit den in dem Patentanspruch aufgeführten Merkmalen gelöst.

Mit der Erfindung wird erreicht, dass durch die Konstruktion und die verwendeten Materialien das Herabrutschen für sämtliche Stückwaren gewährleistet ist. Weiterhin wird erreicht, dass die Rollen mit möglichst wenig Friktion auch bei Belastung drehbar sind. Es wird auch erreicht, dass die Rollenbahn in Hohem Maße stabil ist, gleichzeitig ein geringes Gewicht und kleine Ausmaße aufweist. Weiterhin ist eine sichere Arretierung der Rollen in der Schiene gewährleistet. Der einfache Aufbau gewährleistet das einfache Reinigen.

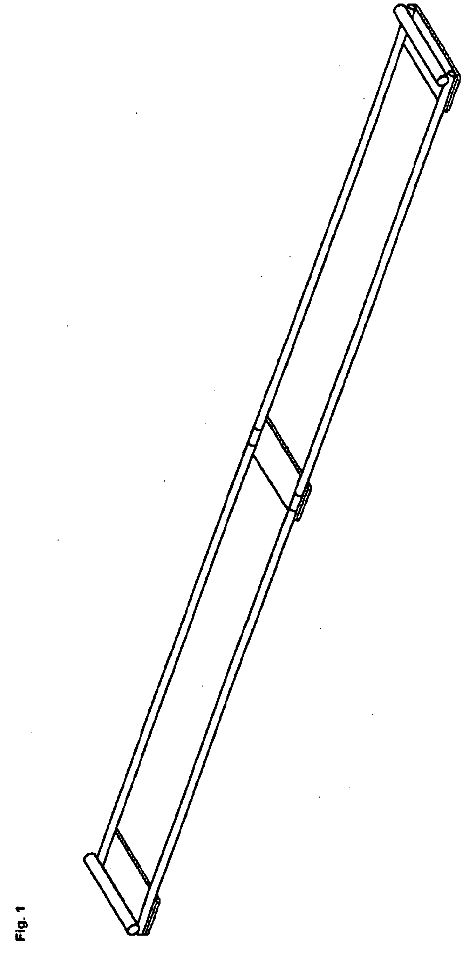

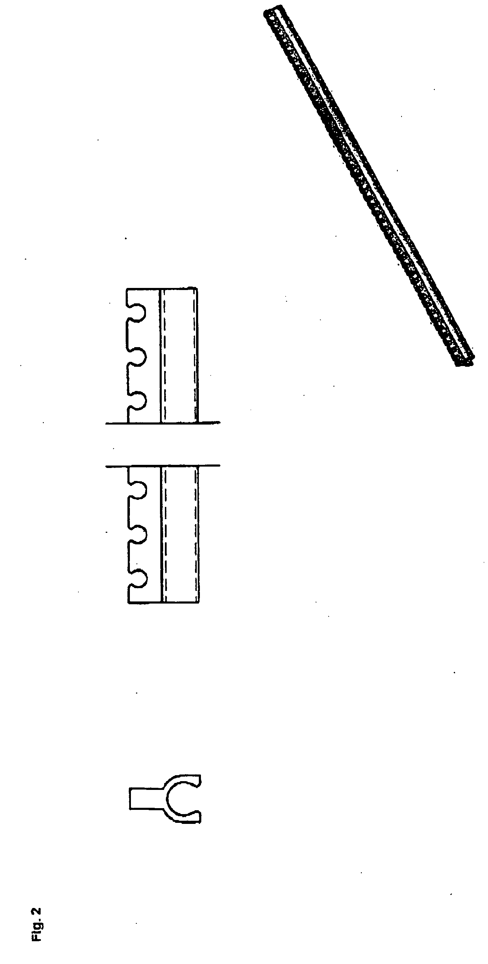

Die im Patentanspruch beschriebene Ausgestaltung des Drahtgestells bestehend aus den Drähten mit den Stahlplatten und Stahlrollen (Fig.1) dient der Rollenbahn als Stahlskelett, in dem auf die äußeren Drähte die Kunststoffschienen aufgesteckt werden (Fig. 2).

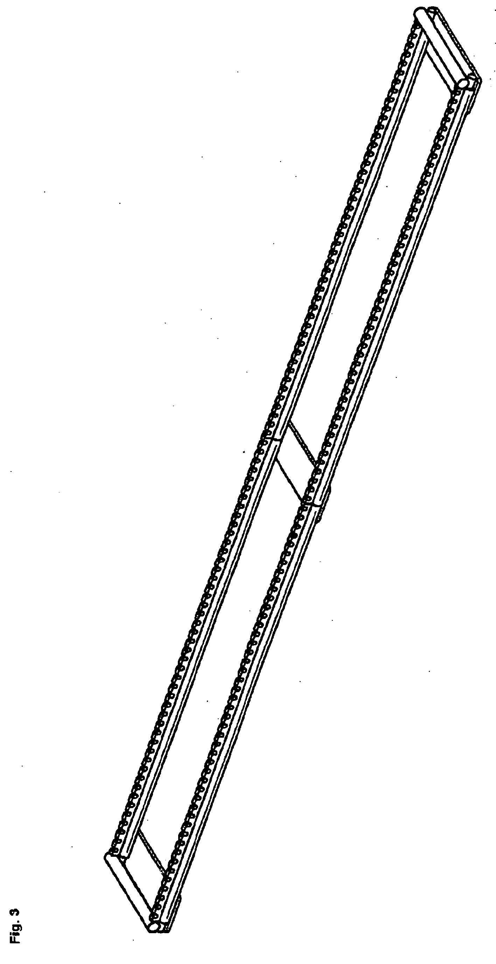

Das Drahtgestell, dient so im inneren der Schienen als stabilisierendes Skelett (Fig. 3) und ermöglicht die Ausführung der Schienen (Fig. 2) in Kunststoff, da die Tragkraft der Rollenbahn von dem Drahtgestell übernommen wird. Gleichzeitig verhindern die Stahlplatten, dass sich die Schienen seitlich verdrehen. Die Stahlrollen verhindern, dass die Schienen von den Drähten rutschen und richten diese gegenüberliegend exakt aus.

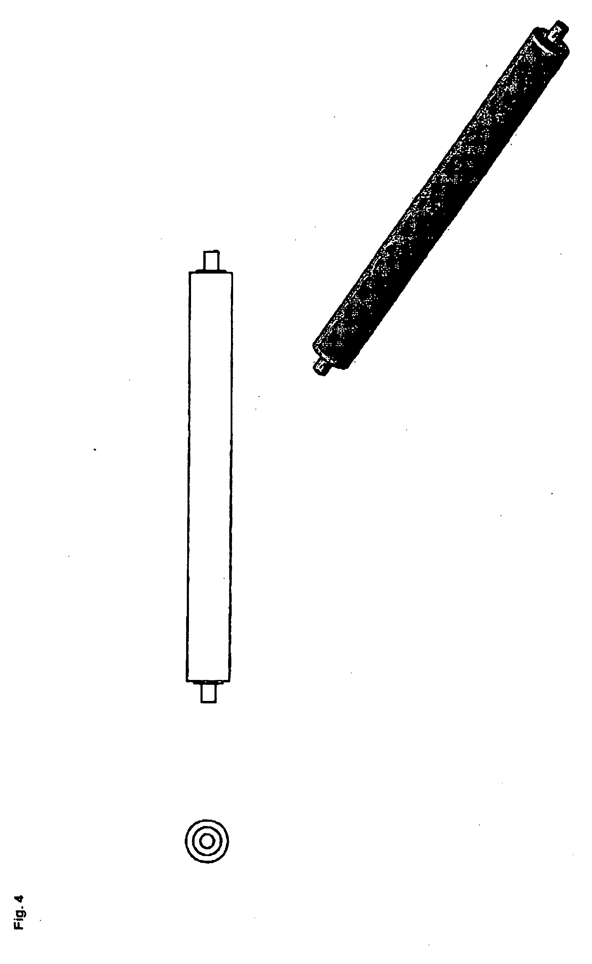

Die im Patenanspruch beschriebene Ausgestaltung der Schiene (Fig. 2) gewährleistet, dass die einzusetzenden Kunststoffrollen (Fig. 4) aus dem gleichen Material bestehen, was die Friktion auf ein optimales Maß reduziert.

Die im Patentanspruch beschriebene Ausgestaltung der Öffnungen der Schienen und der Achsen der Rollen (Fig.2. Fig.4) hat den Vorteil, dass sich der Kunststoff der Schienen beim Einsetzen der Rollen flexibel verhält, sodass die Rollen in der Schiene arretiert bzw. fixiert werden ohne zusätzlichem Materialaufwand oder kompliziertem Bearbeitungsvorgang.

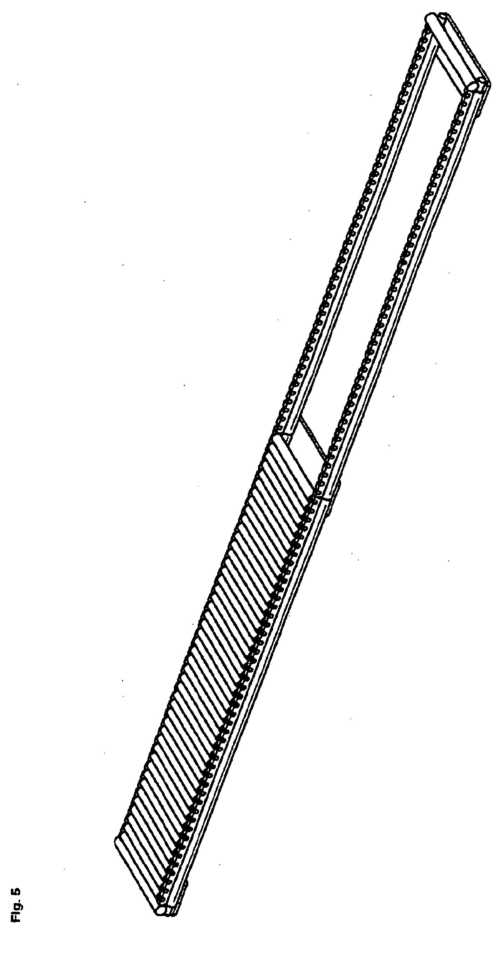

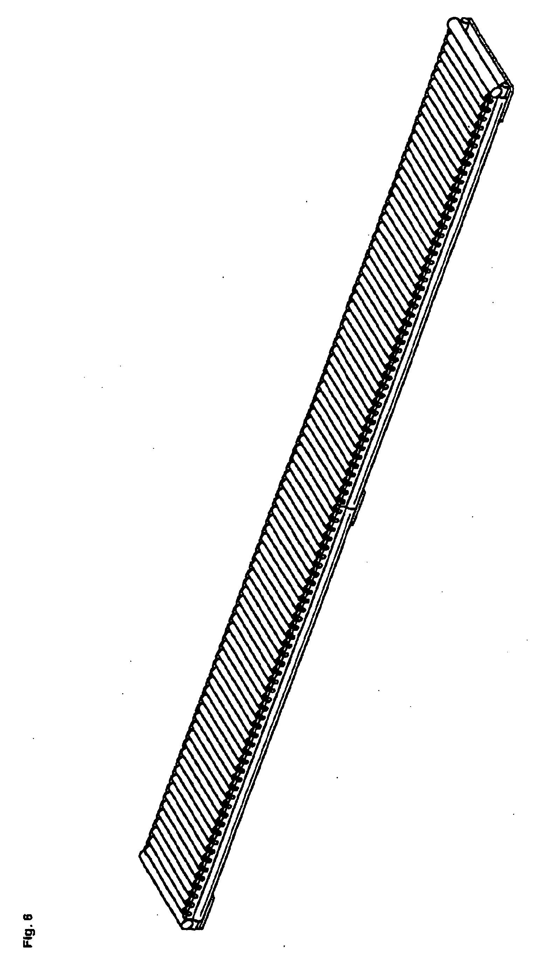

Ein Ausführungsbeispiel wird anhand der Figuren 1 bis 6 erläutert. Figur 1 zeigt das Drahtgestell, bestehend aus den Drähten, den Stahlplatten und den Stahlrollen. Figur 2 zeigt die Konstruktion der Kunststoffschienen mit der sattelartigen Ausgestaltung sowie den nach oben ausgerichteten Einkerbungen mit den sich verjüngenden Öffnungen. Figur 3 zeigt die bereits auf dem Drahtgestell aufgesteckte Schiene, Figur 4 die Rollen und die Figuren 5 und 6 zeigen die Rollenbahn halb und ganz zusammengesetzt.

## Patentansprüche

1. Rollenbahnsystem für Regale und Rutschregale, bestehend aus Rollenbahnen, wobei eine Rollenbahn aus einem Drahtgestell mit außen befindlichen Drähten, die an den jeweiligen Enden und in der Mitte mit angebrachten Stahlplatten fixiert werden und welches an den Enden jeweils eine dort quer angebrachte Stahlrolle aufweist, besteht wobei das Rollenbahnsystem Kunststoffschienen aufweist, wobei auf die außen liegenden Drähte jeweils eine Kunststoffschiene aufgesetzt wird, die im Querschnitt sattelähnlich derart rund und nach unten geöffnet ausgeformt ist, so dass diese exakt auf die Drähte gesteckt werden und von Stahlplatten und den Stahlrollen des Drahtgestelles dort fixiert werden, und diese nach oben ausgerichtete runde Einkerbungen mit oben liegenden verjüngenden Öffnungen in gleichem Abstand aufweisen, so dass nach Aufsetzen der Schienen auf die Drähte diese Einkerbungen exakt gegenüberliegen wobei das Rollenbahnsystem Kunststoffrollen aufweist, deren Durchmesser so ausgelegt ist, dass diese über die Schiene herausragen und die jeweils Außen mit so ausgeformten Achsen versehen sind, so dass diese Achsen exakt in die Einkerbungen der Schienen passen und die Rollen bzw. die Achsen mit Widerstand durch die verjüngenden Öffnungen in die Schienen eingefügt und in den Einkerbungen von den Öffnungen fixiert werden.

## Claims

1. Roller bed system for shelves and sliding racks consisting of roller beds, such roller beds consisting of a wire frame with wires on the outside which are fixed at their respective ends and in the middle by attached steel plates, said frame having a steel roller fixed at right-angles at each end (Fig. 1), with a plastic rail being placed on each of the outer wires whose cross-section is round and open at the lower end in a saddle shape (Fig. 2) such that these rails are placed exactly onto the wires and are fixed there by steel plates and the steel rollers of the wire frame, said rails having round notches facing upwards with tapering openings on the upper side spaced at the same interval (Fig. 2) so that after placing the rails onto the wires, these notches are exactly opposite one another (Fig. 3), and with plastic rollers (Fig. 4) whose diameter is designed such that they protrude beyond the rails and on their outer ends have moulded axles so that these axles fit exactly into the notches of the rails and the rollers or shafts are inserted with resistance through the tapering openings in the rails and are fixed in the notches of the openings (Fig. 5, Fig. 6).

## Revendications

1. Système de convoyeur à rouleaux pour rayonnages et rayonnages à tablettes inclinées, composé de convoyeurs à rouleaux sachant qu'un convoyeur à rouleaux (fig. 1) est composé d'un support en fils métalliques avec des fils se trouvant à l'extérieur, qui sont fixés aux extrémités respectives et au milieu avec des plaques en acier installées et qui présente aux extrémités respectivement un galet en acier dur, installé transversalement, un rail en plastique étant posé sur les fils se trouvant à l'extérieur, sa section en forme de selle, ronde et ouverte vers le bas (fig.2), de telle sorte qu'il est posé exactement sur les fils et y est fixé par les plaques en acier et les galets en acier du support en fils métalliques et qui présentent des entailles rondes, dirigées vers le haut avec des ouvertures de rétrécissement équidistantes (fig. 2) de telle sorte qu'après la pose des rails sur les fils, ces entailles sont exactement les unes en face des autres (fig.3) sachant qu'en utilisant des rouleaux en plastique (fig. 4) dont le diamètre est réalisé de telle sorte que ceux-ci dépassent les rails et sont dotés respectivement à l'extérieur d'axes formés de telle sorte que ceux-ci conviennent exactement aux entailles des rails et que les rouleaux, voire les axes avec résistance, soient insérés dans les rails par les ouvertures rétrécies et fixés dans les entailles des ouvertures (fig. 5, fig. 6).
